# EUROPÄISCHE PATENTANMELDUNG

(11) **EP 1 386 978 A2**
(43) Veröffentlichungstag der Anmeldung: **04.02.2004**
(21) Anmeldenummer: 03015224.3
(22) Anmeldetag: 04.07.2003
(51) Int. Cl.: C22C 38/44, C22C 38/50, C22C 38/54, F16G 13/00

(54) **Stahl mit hoher Festigkeit und gleichzeitig guter Zähigkeit**

(30) Priorität: 01.08.2002 DE 10235219
(71) Anmelder: K.B.P. Kettenwerk Becker-Prünte GmbH, D-45711 Datteln (DE)
(72) Erfinder: Fasel, Astrid, Dr., 45711 Datteln (DE)
(74) Vertreter: Bockhorni, Josef

(57) **Zusammenfassung**

Es wird eine Legierung, insbesondere ein grubenbeständiger Stahl, mit hoher Festigkeit und gleichzeitig guter Zähigkeit beschrieben, der beispielsweise als Material für Ketten, Zubehörteile oder dergleichen in Industrie und Bergbau verwendet werden kann. Um einen Stahl zu schaffen, der gleichzeitig hohe Festigkeitswerte und gute Zähigkeitseigenschaften aufweist, ist die Legierung erfindungsgemäß dadurch gekennzeichnet, dass sie 0,20 bis 0,26 Gew.-% Kohlenstoff, 1,10 bis 1,40 Gew.-% Mangan, 0,90 bis 1,20 Gew.-% Nickel, 0,50 bis 0,60 Gew.-% Molybdän, 0,40 bis 0,70 Gew.-% Chrom, max. 0,25 Gew.-% Silizium, max. 0,020 Gew.-% Phosphor, max. 0,020 Gew.-% Schwefel, 0,02 bis 0,05 Gew.-% Aluminium, weiterhin wenigstens ein Mikrolegierungselement und als Rest im wesentlichen Eisen und übliche Verunreinigungen enthält. In einer anderen Ausführungsform kann die Legierung 0,70 bis 0,90 Gew.-% Molybdän aufweisen. Das wenigstens eine Mikrolegierungselement ist vorteilhaft Vanadium, vorzugsweise mit einem Gehalt von 0,10 + 0,05 Gew.-%, und/oder Titan, vorzugsweise mit einem Gehalt von 0,010 bis 0,10 Gew.-% und/oder Niob, vorzugsweise mit einem Gehalt von 0,02 bis 0,05 Gew.-%. Bevorzugt weist die Legierung zwei Mikrolegierungselemente auf und hier insbesondere Vanadium und Titan oder Vanadium und Niob.

## Beschreibung

Die Erfindung betrifft eine Legierung mit hoher Festigkeit und gleichzeitig guter Zähigkeit, insbesondere einen grubenbeständigen Stahl. Weiterhin betrifft die Erfindung die besondere Verwendung eines solchen Stahls sowie ein aus einem solchen Stahl gebildetes Bauteil.

Im Bergbau werden häufig aus Stahl gefertigte Bergbauketten eingesetzt, die unter anderem als Betriebsmittel in Kettenkratzförderern, in Kohlenhobelanlagen oder dergleichen dienen und in dieser Funktion höchsten statischen und dynamischen Belastungen ausgesetzt sind.

Bei konventioneller Vergütung der bisher bekannten Stähle, die im wesentlichen ein Abschrecken des Stahls bei etwa 880 bis 900 °C in Wasser und ein anschließendes Anlassen bei etwa 480 bis 520 °C vorsieht, kann nur eine Festigkeit von ungefähr 1150 bis 1250 Nmm⁻² mit ausreichender Bauteilsicherheit erreicht werden. Diese Festigkeit ist für die oben genannten Belastungen jedoch nicht ausreichend.

In bezug auf Bergbauketten bestand in den letzten Jahren weiterhin die Notwendigkeit, diese immer höher zu belasten. Zusätzlich ergab sich eine Tendenz zu immer dickeren Abmessungen, so dass die bisher bekannten Stähle wegen zu geringer Festigkeit und Zähigkeit für die Bergbauketten nicht mehr ausreichend sind.

Dies führte zum Erfordernis von Sondergüteklassen für die zu verwendenden Stähle, die jedoch nur durch spezielle Wärmebehandlungen in Verbindung mit höher legierten Werkstoffen realisiert werden können.
Durch die speziellen Wärmebehandlungen soll zum einen erreicht werden, dass die Werkstoff-Festigkeit deutlich höher liegt als die Festigkeit von Standard-Werkstoffen. Hierbei sind in Einzelfällen Werkstoff-Festigkeiten bis etwa 1420 Nmm⁻² zu realisieren. Da aber eine Erhöhung der Festigkeit grundsätzlich mit einer Reduzierung der Zähigkeit, insbesondere der Kerbschlag- und Bruchzähigkeit, einhergeht, kam es bei aus diesen Stählen hergestellten Bergbauketten verstärkt zu Ausfällen, beispielsweise durch sprödbrüchiges Werkstoffverhalten und Anrißbildung.

Zur Verbesserung der Zähigkeit der Bauteile wurden besondere Vergütungs- oder Bearbeitungsverfahren entwickelt, beispielsweise das in der US 44 06 713 beschriebene Verfahren oder das weiter unten näher beschriebene induktive Vergütungsverfahren, die einzelne Wärmebehandlungsschritte oder die komplette Vergütung innerhalb eines sehr kurzen Zeitraums notwendig und möglich machen. Diese Vergütungsverfahren gestatten eine gezielte Einstellung von Härtewerten, die den realen Einsatzbedingungen des Bauteils, beispielsweise der Bergbaukette, angepasst werden können. Die bei den Vergütungsverfahren technologisch bedingte sehr kurze Umwandlungszeit und die nicht homogene Festigkeitsverteilung im Bauteil stellen jedoch an den Werkstoff zusätzlich besondere Anforderungen, beispielsweise an dessen Bruchzähigkeit.

In der Vergangenheit sind verschiedene hochfeste Stähle entwickelt worden, bei denen gleichzeitig auch die Zähigkeitseigenschaften verbessert werden sollten. So ist in der Zeitschrift "Thyssen Edelstahl, Technische Berichte, 6. Band, 1980, Heft 2, Autor Dr.-Ing. Kewal K. Metha" die Entwicklung hochfester Kettenstähle mit verbesserten Zähigkeitseigenschaften beschrieben, bei denen bestimmten Stahllegierungen Vanadium zulegiert wurde. Diese bestimmten Stahllegierungen wiesen jedoch für die in bezug auf Bergbauketten herrschenden Anforderungen keine ausreichenden Zähigkeitswerte auf, so dass der in diesem Bericht beschriebene Weg kommerziell nicht weiter beschritten wurde.

Auch aus der DE-OS-2 030 400 ist ein hochzugfester Stahl bekannt, dem verschiedene Mikrolegierungselemente zulegiert wurden. Auch der in dieser Druckschrift beschriebene Stahl wies jedoch nicht die insbesondere für die Anforderungen an Bergbauketten erforderlichen Festigkeits- und Zähigkeitswerte auf.
Darüber hinaus ist aus der DE-OS-2 139 115 ein Kettenstahl bekannt, der bei guter Schweißbarkeit eine hohe Zähigkeit, insbesondere Kerbschlagzähigkeit sowie eine gute Beständigkeit gegenüber Spannungsriss-Korrosion aufweist. Dies wird durch Zulegieren von geringen Mengen an Bor erreicht. Allerdings können auch mit diesem Stahl nicht die gewünschten Festigkeitswerte erreicht werden.

Ausgehend vom genannten Stand der Technik liegt der vorliegenden Erfindung die Aufgabe zugrunde, eine Legierung bereitzustellen, bei der die beschriebenen Nachteile vermieden werden. Insbesondere soll eine Legierung, insbesondere ein grubenbeständiger Stahl, geschaffen werden, mit dem hohe Festigkeitswerte, wie beispielsweise hohe Prüf- und Bruchkräfte, bei gleichzeitig guten Zähigkeitseigenschaften erreicht werden können. Weiterhin soll ein aus diesem Stahl hergestelltes Bauteil auch eine hohe Lebensdauer aufweisen.

Die Aufgabe wird gemäß einem ersten Aspekt der Erfindung durch eine Legierung mit hoher Festigkeit und gleichzeitig guter Zähigkeit, insbesondere einem grubenbeständigen Stahl gelöst, die dadurch gekennzeichnet ist, dass sie 0,20 bis 0,26 Gew.-% Kohlenstoff, 1,10 bis 1,40 Gew.-% Mangan, 0,90 bis 1,20 Gew.-% Nickel, 0,50 bis 0,60 Gew.-% Molybdän, 0,40 bis 0,70 Gew.-% Chrom, max. 0,25 Gew.-% Silizium, max. 0,020 Gew.-% Phosphor, max. 0,020 Gew.-% Schwefel, 0,02 bis 0,05 Gew.-% Aluminium, weiterhin wenigstens ein Mikrolegierungselement aus der Gruppe bestehend aus Vanadium, Titan und Niob und als Rest im wesentlichen Eisen und übliche Verunreinigungen enthält. Der Anteil an Mikrolegierungselementen beträgt vorzugsweise pro Element maximal 0,15 Gew.-%, insbesondere insgesamt für alle Mikrolegierungselemente 0,45 Gew.-%.

Durch die erfindungsgemäße Legierung wird ein Stahl geschaffen, der gleichzeitig hohe Festigkeitswerte und gute Zähigkeitseigenschaften aufweist.

Die erfindungsgemäße Legierung weist als Basislegierung den in der DIN 17115 "Stähle für geschweißte Rundstahlketten", Ausgabe 2/87 genormten Stahl 1.6758 (23MnNiMoCr54) auf, deren Offenbarungsgehalt insoweit in die Beschreibung der vorliegenden Erfindung einbezogen wird. Dieser Stahl ist bereits besonders vorteilhaft in bezug auf die Streckgrenze, Zugfestigkeit, Bruchdehnung, Einschnürung, Bruch- und Kerbschlagzähigkeit und Schweißeignung. Erfindungsgemäß wird dem Stahl weiterhin wenigstens ein Mikrolegierungselement zulegiert, wodurch erreicht wird, dass hohe Festigkeitswerte bei gleichzeitig guten Zähigkeitseigenschaften erzielt werden können.

Gemäß einer weiteren Ausführungsform der Erfindung wird eine Legierung mit hoher Festigkeit und gleichzeitig guter Zähigkeit, insbesondere ein grubenbeständiger Stahl bereitgestellt, die erfindungsgemäß dadurch gekennzeichnet ist, dass diese 0,20 bis 0,26 Gew.-% Kohlenstoff, 1,10 bis 1,40 Gew.-% Mangan, 0,90 bis 1,20 Gew.-% Nickel, 0,70 bis 0,90 Gew.-% Molybdän, 0,40 bis 0,70 Gew.-% Chrom, max. 0,25 Gew.-% Silizium, max. 0,020 Gew.-% Phosphor, max. 0,020 Gew.-% Schwefel, 0,02 bis 0,05 Gew.-% Aluminium, weiterhin wenigstens ein Mikrolegierungselement aus der Gruppe bestehend aus Vanadium, Titan und Niob und als Rest im wesentlichen Eisen und übliche Verunreinigungen enthält. Der Anteil an Mikrolegierungselementen beträgt vorzugsweise pro Element maximal 0,15 Gew.-%, insbesondere insgesamt für alle Mikrolegierungselemente 0,45 Gew.-%.

Durch diese erfindungsgemäße Legierung wird ebenfalls ein Stahl geschaffen, der gleichzeitig hohe Festigkeitswerte und gute Zähigkeitseigenschaften aufweist.

Als Basislegierung wird eine Variante des oben beschriebenen Werkstoffs 1.6758, nämlich der Werkstoff 1.6797 (23MnNiMoCr648), verwendet. Er weist die chemische Zusammensetzung des Werkstoffs 1.6758 mit einem um etwa 0,2 Gew.-% erhöhten Molybdängehalt auf. Durch die Erhöhung des Molybdängehalts werden die Kernhärtbarkeit und die Anlassbeständigkeit gesteigert. Bei gleicher Anlasstemperatur weist der Werkstoff 1.6797 auch eine höhere Festigkeit auf. Dieser Basislegierung ist wiederum wenigstens ein Mikrolegierungselement zulegiert, was zu den oben beschriebenen vorteilhaften Effekten führt.

Auf der Basis der beiden Werkstoffe 1.6758 und 1.6797 werden durch das Hinzulegieren von wenigstens einem Mikrolegierungselement aus der Gruppe bestehend aus Vanadium, Titan und Niob Sonderlegierungen geschaffen, die insbesondere folgende Vorteile aufweisen:

Die erfindungsgemäßen Legierungen erlauben zunächst die Kombination hoher Festigkeiten bei gleichzeitig guter Zähigkeit. Damit sind die Legierungen besonders vorteilhaft für die Verwendung als Material für Bauteile -beispielsweise Bergbauketten- geeignet, die hohen statischen und dynamischen Belastungen ausgesetzt sind. Wie weiter unten näher beschrieben wird, ist die Erfindung natürlich nicht auf diese spezielle Verwendung der Legierungen beschränkt. Weiterhin ist eine induktive Wärmebehandlung mit relativ kurzen Wärmebehandlungszeiten problemlos möglich. Zusätzlich werden auch die Verschleißeigenschaften positiv beeinflusst. Schließlich weisen die erfmdungsgemäßen Legierungen auch gute Anlassbeständigkeiten auf.

Bevorzugte Ausführungsformen der erfindungsgemäßen Legierungen ergeben sich aus den Unteransprüchen.

Erfindungsgemäß kann das wenigstens eine Mikrolegierungselement Vanadium, vorzugsweise mit einem Gehalt von 0,10 ±0, 05 Gew.-%, und/oder Titan, vorzugsweise mit einem Gehalt von 0,010 bis 0,10 Gew.-% und/oder Niob, vorzugsweise mit einem Gehalt von 0,02 bis 0,05 Gew.-% sein.

Vanadium ist ein Karbidbildner und erhöht die Festigkeit und die Streckgrenze. Durch die Zulegierung von Vanadium steigt der Verschleißwiderstand. Die Anlassbeständigkeit wird verbessert und die Kerbschlagzähigkeit erhöht. Titan ist ebenfalls ein Karbidbildner und wird unter anderem auch zur Stabilisierung gegen interkristalline Korrosion eingesetzt. Es führt zur Komverfeinerung. Außerdem steigert es die Zeitstandsfestigkeit durch die Bildung von Sondernitriden.

Für besondere Anwendungsfälle kann das Hinzulegieren von nur einem einzigen Mikrolegierungselement, beispielsweise nur Vanadium oder nur Titan, vorzugsweise in der jeweils oben beschriebenen Menge, sinnvoll sein.

Bevorzugt sind der erfindungsgemäßen Legierung jedoch zwei Mikrolegierungselemente zulegiert.

Vorteilhaft kann die Legierung Vanadium und Titan, vorzugsweise in den oben beschriebenen Mengen, enthalten. Diese Kombination weist die Vorteile der beiden oben genannten Einzellegierungen auf. Sie ermöglicht den Einsatz des Werkstoffs unter hohen statischen und dynamischen Belastungen, etwa als Bergbauketten in Hochleistungsbetrieben, wo eine Leistungsübertragung mit hohen Sicherheitsfaktoren erforderlich ist.

Alternativ kann die Legierung auch Vanadium und Niob, vorzugsweise in den oben genannten Mengen, enthalten.

In weiterer Ausgestaltung kann auch ein Zusatz von Bor, vorzugsweise in den Gehalten von 0,0005 bis 0,003 Gew.-%, vorteilhaft sein. Bor wird insbesondere dann zugesetzt, wenn besondere Anforderungen an die Durchhärtung, etwa bei größeren Bauteilen, gestellt werden. Die Materialdurchhärtung ist für das Bauteilverhalten von entscheidender Bedeutung, damit hohe Festigkeits- und Zähigkeitswerte nicht nur am Mantel des Bauteilquerschnitts, sondern durchgehend bis zum Kern des Bauteils erzielt werden können.

Durch die erfindungsgemäßen Legierungen kann der weltweiten Tendenz Rechnung getragen werden, die zu besonderen Bauformen der Bauteile, höheren Festigkeitswerten (beispielsweise höheren Prüf- und Bruchkräften) bei guten Zähigkeitseigenschaften und einer erhöhten Lebensdauer der Bauteile geht.

Dies liegt vor allem daran, dass beispielsweise die Zähigkeitseigenschaften direkt mit den kritischen Rißtiefen korrespondieren, die durch Schwingungsbelastung, Korrosion, Verletzungen oder dergleichen auftreten können. Weiterhin haben aus den erfindungsgemäßen Legierungen gebildete Stähle auch ein besonders vorteilhaftes Verschleißverhalten. Dieses wird sowohl durch die Werkstoff-Festigkeit, als auch durch die Zähigkeit maßgeblich beeinflusst. Beide Werte sind bei den erfindungsgemäßen Legierungen besonders hoch.

Erfindungsgemäß können die wie vorstehend beschriebenen Legierungen, insbesondere als grubenbeständiger Stahl, für hochfeste Bauteile mit guter Zähigkeit verwendet werden.

Vorteilhaft können die erfmdungsgemäßen Legierungen für Ketten und Zubehörteile, insbesondere für Bergbau und Industrie, verwendet werden.

Als Ketten kommen beispielsweise Bergbauketten für Förderer- und Hobelanlagen in Betracht. Derartige Ketten sind unter anderem Rundstahlketten, wie sie in der DIN 22 252 "Rundstahlketten für Förderer und Gewinnungsanlagen im Bergbau", Ausgabe 01/93 genormt sind, deren Offenbarungsgehalt insoweit in die Beschreibung der vorliegenden Erfindung einbezogen wird. Natürlich ist die Erfindung nicht auf die Verwendung des Stahls für solche Ketten beschränkt.

Als Zubehörteile kommen beispielsweise -jedoch nicht ausschließlich- Schlösser, Mitnehmer oder dergleichen in Betracht.

Gemäß einem weiteren Aspekt der Erfindung wird ein Bauteil mit hoher Festigkeit und guter Zähigkeit bereitgestellt, das erfindungsgemäß aus einem Stahl, insbesondere einem grubenbeständigen Stahl, mit einer wie vorstehend beschriebenen erfindungsgemäßen Legierung gebildet ist.

Ein solches Bauteil weist eine hohe Festigkeit bei gleichzeitig guten Zähigkeitseigenschaften auf, so dass es hohen dynamischen und statischen Belastungen standhalten kann und eine lange Lebensdauer aufweist. Zu den Vorteilen, Effekten und Wirkungen eines solchen Bauteils wird auf die obigen Ausführungen zur erfmdungsgemäßen Legierung vollinhaltlich Bezug genommen und hiermit verwiesen.

Bevorzugte Ausgestaltungen des Bauteils ergaben sich aus den Unteransprüchen.

Erfindungsgemäß kann das Bauteil einen Korrosionsschutz aufweisen. Vorteilhaft wird dieser Korrosionsschutz durch eine Feuerverzinkung erreicht. Natürlich sind auch andere Maßnahmen zur Erzielung des Korrosionsschutzes möglich.

Eine Feuerverzinkung der Bauteile ist nicht zuletzt deshalb möglich, da die aus den erfindungsgemäßen Legierungen gebildeten Stähle, aus denen die Bauteile bestehen, gute Anlassbeständigkeit aufweisen. Dabei liegt die Anlasstemperatur der Stähle oft schon im Bereich der Feuerverzinkungstemperaturen, nämlich bei etwa 450 bis 480 °C. Die hohe Vergütungsfestigkeit der aus den erfindungsgemäßen Stählen hergestellten Bauteile wird durch eine Feuerverzinkung nur unwesentlich gesenkt.

In weiterer Ausgestaltung kann das Bauteil vergütet, vorzugsweise induktiv vergütet, sein.

Insbesondere durch die induktive Vergütung wird es auf einfache und kostengünstige Weise möglich, die Bauteile je nach Anforderungsfall und Bedarf individuell zu vergüten. Die induktive Vergütung beruht im allgemeinen auf einem induktiven Erhitzen durch Umsetzen von elektrischer Energie in Wärme. Es können sowohl die kompletten Bauteile, als auch nur partielle Bereiche der Bauteile wärmebehandelt werden. Dazu passieren die Bauteile oder Bauteilbereiche das magnetische Wechselfeld einer Spule. Die dabei induzierten Wechselströme führen zu einer Erhitzung des Materials. Ja nach der Leistung des Wechselfelds können die Bauteile mehr oder weniger stark erwärmt werden. Einige Vorteile der induktiven Vergütung sind somit eine gleichmäßige Aufheizung; kurze Erwärmungszeiten und dadurch bedingte geringe Verzunderungen; keine Grobkombildung durch Überzeiten und Überhitzen; sichere Beherrschung der Prozessparameter und -temperaturen sowie eine durchaus resultierende hohe Reproduzierbarkeit; ein geringer Verzug; und ein Härteverlauf, der der jeweiligen Konstruktion angepasst werden kann.

Erfindungsgemäß kann das Bauteil als Kette oder Zubehörteil, insbesondere für den Bergbau oder die Industrie, ausgebildet sein. Exemplarische Beispiele für vorteilhafte Anwendungen, die jedoch nicht abschließend zu verstehen sind, sind weiter oben beschrieben worden. Durch die vorliegende Erfindung können Stähle für derartige hochfeste Bauteile mit guten Zähigkeitseigenschaften bereitgestellt werden, mit denen die besonderen Anforderungen von Hochleistungsbetrieben bei gleichzeitiger Leistungssteigerung und Lebensdauererhöhung der Bauteile berücksichtigt werden können.

## Patentansprüche

1. Legierung mit hoher Festigkeit und gleichzeitig guter Zähigkeit, insbesondere grubenbeständiger Stahl, **dadurch gekennzeichnet, dass** diese 0,20 bis 0,26 Gew.-% Kohlenstoff, 1,10 bis 1,40 Gew.-% Mangan, 0,90 bis 1,20 Gew.-% Nickel, 0,50 bis 0,60 Gew.-% oder 0,70 bis 0,90 Gew.-% Molybdän, 0,40 bis 0,70 Gew.-% Chrom, max. 0,25 Gew.-% Silizium, max. 0,020 Gew.-% Phosphor, max. 0,020 Gew.-% Schwefel, 0,02 bis 0,05 Gew.-% Aluminium, weiterhin wenigstens ein Mirkolegierungselement aus der Gruppe bestehend aus Vanadium, Titan und Niob und als Rest im wesentlichen Eisen und übliche Verunreinigungen enthält.

2. Legierung nach Anspruch 1, **dadurch gekennzeichnet, dass** das wenigstens eine Mikrolegierungselement Vanadium mit einem Gehalt von 0,10 ± 0,05 Gew.-% und/oder Titan mit einem Gehalt von 0,010-0,10 Gew.-% und/oder Niob mit einem Gehalt von 0,02 bis 0,05 Gew.-% ist.

3. Legierung nach einem der Ansprüche 1 oder 2, **dadurch gekennzeichnet, dass** diese zwei Mikrolegierungselemente enthält.

4. Legierung nach einem der Ansprüche 1 bis 3, **dadurch gekennzeichnet, dass** diese Vanadium und Titan als Mikrolegierungselemente enthält.

5. Legierung nach einem der Ansprüche 1 bis 4, **dadurch gekennzeichnet, dass** diese Vanadium und Niob als Mikrolegierungselemente enthält.

6. Legierung nach einem der Ansprüche 1 bis 5, **dadurch gekennzeichnet, dass** diese als weiteres Mirkolegierungselement Bor, vorzugsweise mit einem Gehalt von 0,0005 bis 0,003 Gew.-%, enthält.

7. Verwendung einer Legierung nach einem der Ansprüche 1 bis 6 als Stahl, insbesondere als grubenbeständiger Stahl, für hochfeste Bauteile mit guter Zähigkeit, insbesondere für Ketten und Zubehörteile im Bergbau.

8. Bauteil mit hoher Festigkeit und guter Zähigkeit, **dadurch gekennzeichnet, dass** dieses aus einem Stahl, insbesondere einem grubenbeständigen Stahl, nach einem der Ansprüche 1 bis 6 gebildet ist.

9. Bauteil nach Anspruch 8, **dadurch gekennzeichnet, dass** das Bauteil einen Korrosionsschutz ausweist, wobei das Bauteil insbesondere feuerverzinkt ist.

10. Bauteil nach Anspruch 8 oder 9, **dadurch gekennzeichnet, dass** das Bauteil vergütet, insbesondere induktiv vergütet, ist.

11. Bauteil nach einem der Ansprüche 8 bis 10, **dadurch gekennzeichnet, dass** das Bauteil als Kette oder Zubehörteil ausgebildet ist.
